# EUROPEAN PATENT APPLICATION

(11) **EP 3 139 679 A1**
(43) Date of publication of application: **08.03.2017**
(21) Application number: 16305052.9
(22) Date of filing: 21.01.2016
(51) Int. Cl.: H04W 72/02, H04W 88/06

(54) **METHOD TO OPERATE A USER EQUIPMENT**

(30) Priority: 03.09.2015 US 201562213944 P
(71) Applicant: ALCATEL LUCENT, 92100 Boulogne-Billancourt (FR)
(72) Inventor: SAUR, Stephan, 70435 Stuttgart (DE); HUANG, Howard, Murray Hill, NJ 07974-0636 (US); TAVARES, Marcos, Holmdel, NJ 07733-1661 (US)
(74) Representative: Mooij, Maarten

(57) **Abstract**

Proposed is a method to operate a user equipment in a radio access network for transmitting uplink payload. In a first step (24) a determination is made whether a cell of the radio access network is selected, wherein the determination of the first step (24) is based on first information (28). In a second step (34) a determination is made whether the cell which has been selected in the first step (24) is accessed via a first radio access scheme or a second radio access scheme, wherein the determination of the second step (34) is based on second information (38). In a third step (44a; 44b) the uplink payload (8) is transmitted via an uplink channel of the selected cell according to the radio access scheme selected in the second step (34).

## Description

### Field of the invention

The invention relates to a method to operate a user equipment of a radio access network and a method to operate a baseband unit.

### Background

Long term evolution, LTE, was developed by 3GPP to cope with the increasing demand for better Quality of Service, QoS, and the emergence of bandwidth consuming multimedia applications. The LTE radio interface is completely packet-oriented and uses variants of the OFDM technology both in downlink, BBU to UE, and uplink, UE to BBU, direction. The basic resource unit on the air interface is called a Physical Resource Block, PRB, which can be assigned to a certain user, i.e. UE, in Resource Block Groups, RBGs, that range over the used frequency domain, bandwidth, and the subframes within a 1 ms timeslot transmission time interval, TTI in the time domain. At every TTI, a scheduling decision has to be made on the exclusive allocation of available PRBs to requesting users, either from the network side or from the terminal side in order to achieve an orthogonal transmission on the air interface. This decision is made by an entity called scheduler, which can be divided into a Downlink-Scheduler for downlink PRB allocation and an Uplink-Scheduler for UL PRB allocation. In LTE, both scheduler parts run in the BBU, supported by respective control data sent to and from the UE over the control channels of the air interface.

The upcoming "Internet of Things" increases the so called machine-type communication with an associated traffic volume. Moreover, with increasing numbers of active mobile users in a cell, scalability of the radio access system of LTE is limited. One important characteristic is that a big number of machine devices transmit sporadically small payload messages, i.e. small individual user throughput, but overall significant network load. The radio access schemes of existing technologies like LTE are primarily designed for the support of high data rates and high mobility. In consequence the radio access of machine devices becomes rather inefficient regarding required signalling overhead.

### Summary

In view of the prior art, it is an object of the present disclosure to improve the communication in radio access networks.

Therefore it is proposed a method to operate a user equipment in a radio access network. The method comprises selecting a cell of the radio access network based on first information. The method further comprises determining if the selected cell is accessed via a first radio access scheme or a second radio access scheme based on second information. Furthermore, the method comprises transmitting uplink payload via an uplink channel of the selected cell according to the radio access scheme as determined.

In an advantageous embodiment the first information and/or second information comprises information with respect to a downlink channel of the selected cell and/or with respect to an uplink channel of the selected cell and/or the state of a baseband unit of the selected cell. Advantageously the decision may be based on the evaluation of the downlink leaving out any active communication with the baseband unit.

In an advantageous embodiment a threshold value in a range is determined in dependence on the first information and/or in dependence on the second information, wherein a random value in the range is determined, and wherein the first radio access scheme or the second radio access scheme is selected in dependence on whether the random value is greater than or less than the threshold value. This introduces further variability to access of the radio network.

In an advantageous embodiment the first and/or second information comprises a load indication received from the baseband unit of the selected cell, wherein the first radio access scheme is selected if the load indication is below a low load indication threshold. Advantageously the radio access scheme is selected in dependence of the load of the baseband unit and therefore provides an adaptive behaviour of the user equipment in the cell.

In an advantageous embodiment the radio access scheme is selected randomly if the load indication is above the low load indication threshold.

In an advantageous embodiment the second radio access scheme is selected if the load indicator is above a high load indication threshold.

In an advantageous embodiment the information with respect to a downlink channel of the respective cell comprises a number of ACKs and/or NACKs observed on the downlink channel.

In an advantageous embodiment the first and/or second information comprises: an indication from the respective baseband unit of access denial for the type of uplink payload to be transmitted; and/or an indication from the respective baseband unit to use one of the first transmission scheme and the second transmission scheme; an indication of a load of an uplink channel and/or of the respective baseband unit; and/or an indication of a queue length of the respective baseband unit.

In an advantageous embodiment the first or second information comprises: a size of the uplink payload to transmit; and/or a buffer size of the user equipment comprising uplink payload to transmit; and/or a first number of failed attempts to transmit the uplink payload by means of the first radio access scheme; and/or a second number of failed attempts to transmit the uplink payload by means of the second radio access scheme; a priority of the user equipment.

In an advantageous embodiment the first radio access scheme comprises: transmitting the uplink payload without a prior uplink resource request. The second radio access scheme comprises: transmitting an uplink resource request; receiving an uplink resource assignment; and transmitting the uplink payload according to the uplink resource assignment.

A method to operate a baseband unit of a radio access network is proposed to interact with the method for operating the user equipment. The method comprises: receiving the uplink payload and a corresponding preamble from the user equipment in a cell of the baseband unit without a prior uplink resource assignment; decoding the preamble and the corresponding uplink payload; determining a failure regarding the uplink payload; and transmitting an uplink resource assignment in order to initiate or repeat the transmission of the uplink payload by the user equipment. Advantageously the proposed method allows a seamless transition between the first and the second radio access schemes.

Advantageously it is provided a method for efficient radio access for small payload messages while maximizing spectral efficiency. Also the number of supported devices is increased. Moreover, an access delay and consumed energy at the user equipment are reduced. A performance degradation regarding broadband traffic is avoided as the method allows an integration of multiple different services over a single air interface. Especially machine-type communication benefits from the proposed method as the machine devices / user equipments will make a decision whether or not it will make an access attempt in the selected cell. And if it will attempt an access, it performs one of two radio access schemes based on second information. Advantageously the proposed method allows a seamless transition between the first and the second radio access schemes.

### Brief description of the figures

- Figure 1: shows schematically two cells of an exemplary radio access network;
- Figure 2: shows schematically a first radio access scheme;
- Figure 3: shows schematically a second radio access scheme;
- Figure 4: shows schematically a flow diagram for an operation of an user equipment;
- Figure 5: shows schematically a flow diagram for an operation of a baseband unit; and
- Figure 6: shows schematically a time-frequency diagram.

### Description of the embodiments

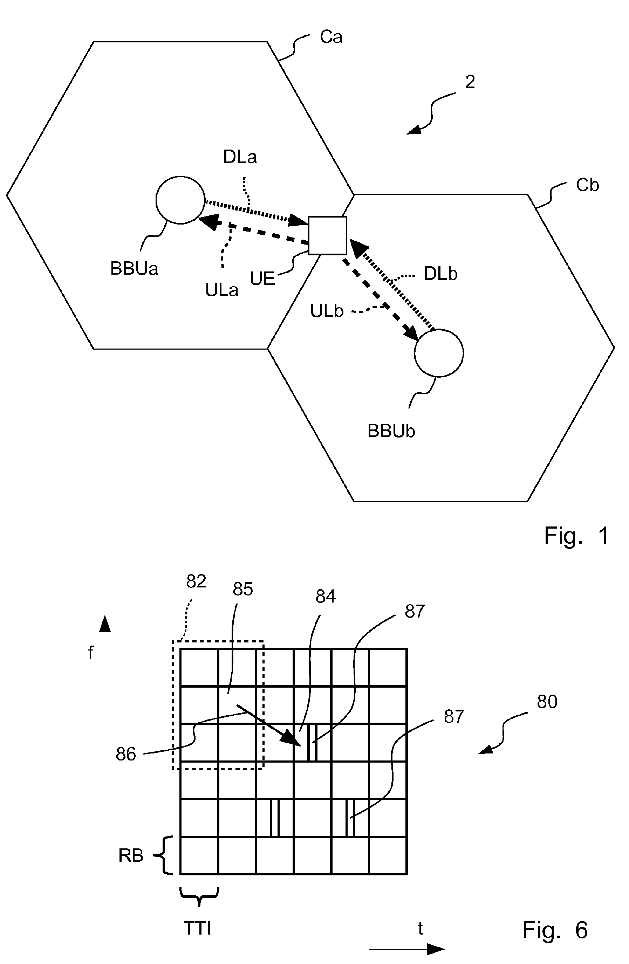

Figure 1 shows schematically two cells Ca, Cb of an exemplary radio access network 2. A user equipment UE may connect to a first baseband unit BBUa of the first cell Ca or to a second baseband unit BBUb of the second cell Cb. It is provided a respective downlink channel DLa, DLb and a respective uplink channel ULa, ULb. Of course the BBUa and BBUb may be realized by respective remote radio heads, each remote radio head providing a respective cell Ca, Cb. Of course figure 1 is for illustrative purpose only and one baseband unit BBU may be capable of providing a plurality of cells Ca, Cb by means of respective remote radio heads. The term baseband unit BBU includes a base station, especially an eNodeB.

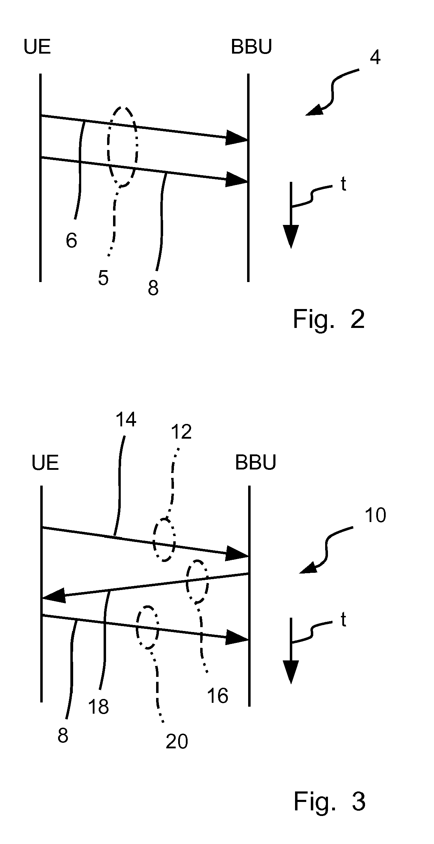

Figure 2 shows schematically a first radio access scheme 4 according to which the user equipment UE transmits in a transmitting step 5 a preamble 6 and uplink payload 8 via the uplink channel UL to the baseband unit BBU. The first radio access scheme 4 is therefore a one-stage radio access scheme.

Figure 3 shows schematically a second radio access scheme 10 according to which the user equipment UE transmits in a request step 12 an uplink resource request 14 to the baseband unit BBU via the uplink channel UL. The second radio access scheme 10 is therefore a two-stage radio access scheme. In response to the uplink resource request 14 the baseband unit BBU transmits in an assignment step 16 an uplink resource assignment 18 to the user equipment UE via the downlink channel DL. In response to the received uplink resource assignment 18 the user equipment UE transmits in a transmitting step 20 the uplink payload 8 to the baseband unit BBU via the uplink channel UL.

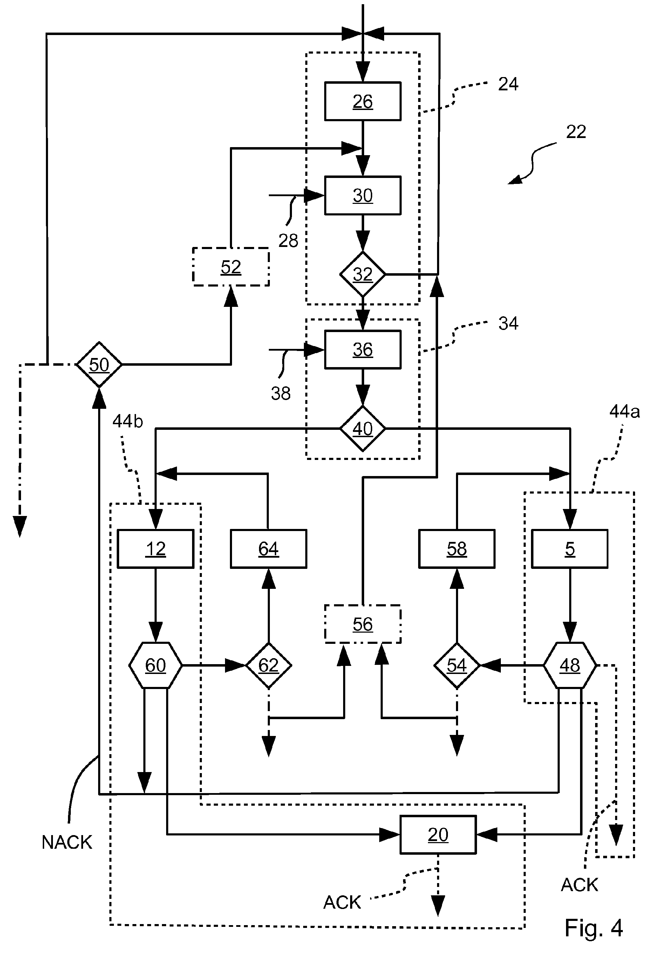

Figure 4 shows schematically a flow diagram 22 for an operation of the user equipment UE. In a first step 24 a determination is made whether the cell C of the radio access network 2 is selected. Therefore the user equipment selects one of the cells Ca, Cb and synchronizes in a step 26 to the respective downlink DLa, DLb to evaluate the respective downlink DLa, DLb. In dependence on first information 28 the downlink DL is evaluated in step 30. In dependence of the outcome of this evaluation of the downlink DL it is decided in step 32 whether an access attempt is started. To start an access attempt it is proceeded to a second step 34; otherwise it is returned to execute the first step 24, preferably with a different cell as the previous one selected.

The second information 38 may comprise an explicit request from the baseband unit BBU to use the first or the second radio access scheme 4, 10. The first information 28 may comprise an access denial for the type of uplink payload 8 to be transmitted, for example machine-type uplink payload, a load indicator, a queue length, or ACKs/NACKs observed from a downlink channel of the selected cell C.

According to an embodiment of step 36 a threshold value in a range is determined in dependence on the first and second information 28, 38. For example, in a range from zero to one in dependence on a load situation of the baseband unit BBU the threshold value is determined to 0.1. Zero in the range means that the baseband unit BBU is completely unloaded. One in the range means that the BBU is completely loaded. Therefore 0.1 means that the baseband unit BBU is relatively unloaded. A random variable in the range is determined for example with a uniform distribution in the range. The first radio access scheme 4 or the second radio access scheme 10 is selected in dependence on whether the random variable is greater than or less than the threshold value. For example in an unloaded situation of the baseband unit BBU according to the threshold 0.1 the determined random value has a high probability to fall into the range between 0.1 and 1. If so, the first radio access scheme 4 is selected as the probability of a resulting ACK by this one-stage radio access scheme in an unloaded situation is high.

According to an embodiment the first information 28 and/or the second information 38 comprises a load indication, for example between 0 for unloaded and 1 for fully loaded, received from the baseband unit, and wherein the first radio access scheme 4 is selected if the load indication is below a low load indication threshold. The first or second radio access scheme 4, 10 is selected randomly if the load indication is above the low load indication threshold and below a high load indication threshold. The second radio access scheme is selected if the load indicator is above a high load indication threshold. However, also only one threshold to execute one of the radio access schemes 4 or 10 is possible. The load indication can be ratio of the number of user equipments UEs registered on the baseband unit BBU and the number of free slots for registering user equipments on the baseband unit BBU. The load indication can also be a processing load of a respective processing entity of the baseband unit BBU.

In an embodiment the first information 28 and/or the second information 38 comprises a queue length of the baseband unit BBU which may be observed by the user equipment UE. The queue length indicates the number of devices currently waiting for data transmission after successful preamble detection. The user equipment UE may firstly check the queue lengths from different baseband units BBUa and BBUb in step 30 and then select the baseband unit BBU with the smallest queue length if the link quality to this baseband unit BBU is sufficient. If not, the user equipment UE may select another baseband unit BBU with best compromise between link quality and queue length. Alternatively or additionally, the user equipment may risk to execute the first radio access scheme 4 if the queue length for the second radio access scheme 10 exceeds a respective queue length threshold value.

In an embodiment of the step 30 the user equipment UE observes ACKS/NACKS sent on a downlink channel in the cell C to further user equipments UEs (if possible) and base its decision on this information. For example, if a number of NACKS exceed a respective threshold value in a period of time, this indicates that too few upload resources are currently available and another cell C is examined. In contrast, if the ACK/NACK channel is almost empty, the user equipment UE will know that the cell C is unloaded and may in step 32 select the respective cell C and may in step 36 decide to execute the third step 44a initiating the first radio access scheme 4. Also a ratio of ACKs/NACKs may be observed.

In an embodiment the user equipment UE - after being successful in connecting to the baseband unit BBU of the selected cell C - transmits the number of trials of sending the uplink payload 8 before sending the payload 8 to the baseband unit BBU. A trial of sending the uplink payload 8 may comprise that the baseband unit BBU selected for receiving the uplink payload 8 has not even received the respective preamble. The number of trials may include a number of passing one or more of the following paths for the same payload 8: the path from step 48 to step 26 or 30, the path from step 60 to step 26 or 30, the path from step 60 to 12, the path from step 48 to 5, the path from step 62 to step 26, the path from step 54 to step 26.Based on a high number of trials the baseband unit BBU may assign a higher priority to the user equipment UE in form of the first or second information 28, 38. Correspondingly, for a low number of trials the baseband unit BBU may assign a lower priority to the user equipment UE in form of the first or second information 28, 38. In the case of a high priority the baseband unit BBU may request the user equipment UE to use the second radio access scheme 10 in form of a two-stage radio access scheme in order to ensure the submission of further upload payload 8. Advantageously a further metric is provided for the transmission of upload payload 8.

The second information 38 may also comprise: a size of the uplink payload 8 to send and/or a transmission history including number of attempts and whether the first or the second radio access scheme 4 or 10 was executed and/or a relative priority of the user equipment and/or an amount of data of uplink payload 8 remaining in the buffer. A user equipment UE can have a higher relative priority if, for example, the owner pays for a higher quality of service. Then a decision can be made to ensure a higher probability of successful transmission, at the expense of other devices having a lower probability of success.

In an embodiment of the step 36 the user equipment UE generates a threshold value in dependence of the second information 38, for example between 0 and 1, indicating the probability of the device selecting either the first or second radio access scheme 4, 10. The user equipment UE then generates a uniform random variable between 0 and 1. If this uniform random variable is below the threshold value, the first radio access scheme 4 is used. Otherwise, the second radio access scheme 10 is used. So, a threshold value is generated which results for a value 0 in a probability of one for executing the first radio access scheme 4 and for a value of 1 in a probability of one for executing the second radio access scheme 4.

In the second step 34 it is determined whether the selected cell C is accessed via the first radio access scheme 4 or the second radio access scheme 10. In step 36 second information 38 is evaluated and in step 40 it is determined whether to transmit the uplink payload according to the first or the second radio access scheme 4, 10.

According to an embodiment the steps 30 and 36 and also the first and second information 28 and 38 are equal resulting in less computation effort.

Accordingly a third step 44a for the first radio access scheme 4 and a third step 44b for the second radio access scheme 10 are provided. In both third steps 44a, 44b the uplink payload 8 is transmitted via the uplink channel UL of the selected cell C according to the radio access scheme 4, 10 selected in the second step 34.

The third step 44a comprises the step 5. After the step 5 it is executed the step 48. If an ACK from the baseband unit BBU is received in step 48, the uplink payload was sent with success.

If neither an ACK nor an NACK is received in step 48 a step 54 is executed. If a maximum number of attempts to send the uplink payload 8 is reached, the uplink payload 8 is discarded or a timer is started in step 56. After a pre-defined time the process is continued with step 26 of the first step 24 to try another cell C for sending the uplink payload 8. The maximum number of attempts may refer to the number of executed third steps 44a or to the number of executed third steps 44b or to the sum of both. If the number of maximum attempts to send the uplink payload 8 is not reached the transmission power of the user equipment UE is increased in step 58 and the process continues with step 5.

If an uplink resource assignment 18 is received in step 48 the uplink payload 8 is transmitted in step 20 which is followed by an ACK of the baseband unit BBU. The step 20 comprises a HARQ process according to which the payload 8 may be retransmitted if the payload 8 is not received error-free by the baseband unit BBU.

The third step 44b comprises the step 12. After the step 12 it is executed the step 60. If an uplink resource assignment 18 is received in step 60 the uplink payload 8 is transmitted in step 20 which is followed by an ACK of the baseband unit BBU.

If neither an ACK nor an NACK is received in step 60 the step 62 is executed. If a maximum number of attempts to send the uplink payload 8 is reached, the uplink payload 8 is discarded or a timer is started in step 56. If the number of maximum attempts to send the uplink payload 8 is not reached the transmission power of the user equipment UE is increased in step 64 and the process continues with step 12.

If a NACK is received in step 48 or step 60 a step 50 is executed. If a maximum number of attempts to send the uplink payload 8 is reached, the uplink payload 8 is discarded or it is returned to the first step 24 to try a further cell C for sending the uplink payload 8. The maximum number of attempts may refer to the number of executed third steps 44a or to the number of executed third steps 44b or to the sum of both. If the number of maximum attempts to send the uplink payload 8 is not reached a timer is started in step 52 and after a pre-defined time or a randomly determined time the process is continued with step 30.

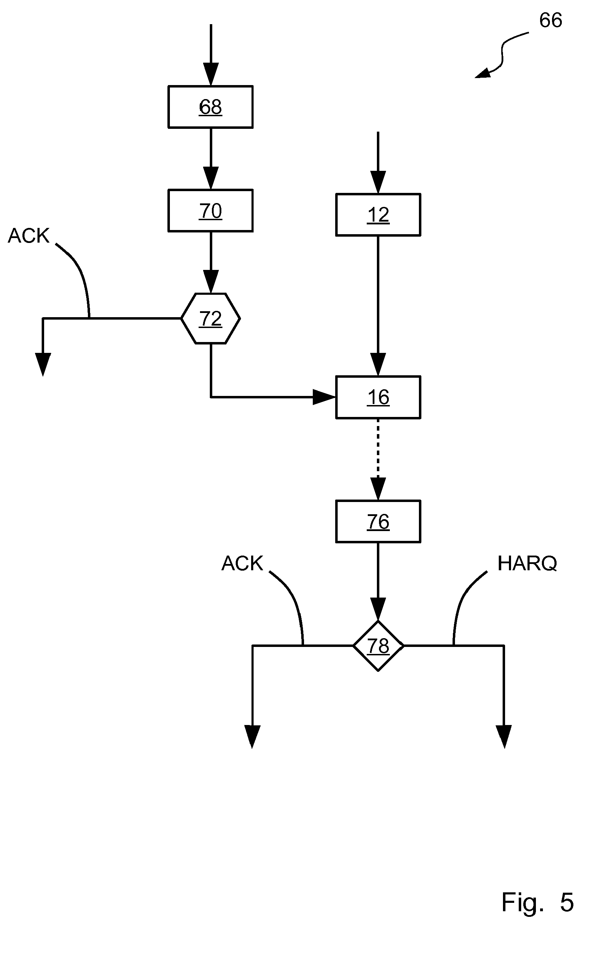

Figure 5 shows schematically a flow diagram 66 for an operation of the baseband unit BBU. 9. In a receiving step 68 the uplink payload 8 and the corresponding preamble 6 are received from the user equipment UE in a cell C of the baseband unit BBU without a prior uplink resource assignment 18. In a decoding step 70 the preamble 6 and the corresponding uplink payload 8 are decoded. In a failure determining step 72 a failure regarding the uplink payload 8 is determined. This failure may comprise that a checksum calculated from the payload 8 is not equal to a checksum received together with the uplink payload 8. The failure may also comprise that the uplink payload 8 includes an invalid UE identification, i.e. the uplink payload 8 cannot be assigned to any user equipment UE registered in the baseband unit BBU. If no failure is determined the baseband unit BBU transmits an ACK to the user equipment UE. In the assignment step 16 a resource on the uplink channel UL, for example in form of a frequency sub-band and a subframe on the uplink channel UL, is granted for the user equipment UE. The assignment step 16 is executed when a failure regarding the uplink payload 8 is determined in the failure determination step 76. However, the assignment step 16 is also executed when an uplink resource request 14 is received in the request step 12.

After the reception of the uplink payload 8 it is determined in step 76 whether the uplink payload 8 is received correctly. If so, an ACK is transmitted to the user equipment UE according to step 78. If the uplink payload 8 is not received correctly a hybrid automatic repeat request sequence, HARQ, is started.

Figure 6 shows schematically a time-frequency diagram 80 of a frame of a physical layer. A transmission time interval, TTI, is equivalent to one subframe and is the smallest allocation unit in time direction t. A resource block, RB, is equivalent to a frequency subband and is the smallest allocation unit in frequency direction. A number of the resource blocks according to the preamble area 82 are reserved for preambles, especially for the preamble 6 and the uplink resource request 14 for example in the resource block 85. Within the preamble area 82 many different preamble sequences originating from a plurality of user equipments UE are superimposed. As examples, Zadoff-Chu sequences or m-sequences can be applied. Their correlation properties allow the baseband unit BBU to detect each individual sequence. A sub-set of available sequences may be reserved for the first radio access scheme 4, and another sub-set for the second radio access scheme 10. A user equipment UE selects randomly one sequence within the preferred sub-set. Each preamble sequence within the sub-set of the first radio access scheme 4 points according to arrow 86 uniquely to one uplink resource according to the resource block 84 for transmission of the uplink payload 8. Pilot zones 87 are indicated. It is possible that more than one preamble sequence point to the same uplink resource, i.e. a collision of data does not necessarily lead to a collision of preambles as preambles have a lower collision probability than data. This scheme allows the easy application of Multi-User Detection (MUD), e.g. through a Successive Interference Cancellation (SIC) receiver.

Also different types of uplink resources may be defined. The uplink resources can differ e.g. in size (number of RBs), and expected modulation and coding scheme (MCS). A user equipment will select a preamble sequence that points to a uplink resource according to its needs like payload size and channel quality.

Preamble sequences of the sub-set for the second radio access scheme 10 may also point uniquely to one specific uplink resource, e.g. eight subframes after the preamble zone. The information related to uplink resource assignment 18 would then be a simple one bit ACK/NACK. Alternatively preamble sequences within the sub-set of the second radio access scheme 10 may also point to a plurality of uplink resources, and the baseband unit would assign one appropriate uplink resource. The information related to uplink resource assignment 18 would then be e.g. time-frequency indices of this RB, or a queue length. The zone for the preamble 6 and the zone for the uplink payload 8 might move or get spread on the time-frequency plane due to varying interference conditions. This provides flexibility in resource assignment along the time-frequency plane both for the transmission of the preamble 6 as well as for the uplink payload 8.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method to operate an user equipment (UE) in a radio access network (2) for transmitting uplink payload (8), the method comprising:
- selecting a cell (C) of the radio access network (2) based on first information (28);
- determining if the selected cell (C) is accessed via a first radio access scheme (4) or a second radio access scheme (10) based on second information (38); and
- transmitting the uplink payload (8) via an uplink channel (UL) of the selected cell (C) according to the radio access scheme (4; 10) as determined.

2. The method according to claim 1, wherein
the first information (28) and/or second information (38) comprises information with respect to a downlink channel (DL) of the selected cell (C) and/or with respect to an uplink channel (UL) of the selected cell (C) and/or the state of a baseband unit (BBU) of the selected cell (C).

3. The method according claim 1 or 2, wherein a threshold value in a range is determined in dependence on the first information (28) and/or in dependence on the second information (38), wherein a random value in the range is determined, and wherein the first radio access scheme (4) or the second radio access scheme (10) is selected in dependence on whether the random value is greater than or less than the threshold value.

4. The method according to claim 1 or 2, wherein the first information (28) and/or second information (38) comprises a load indication received from a baseband unit (BBU) of the selected cell (C), and wherein the first radio access scheme (4) is selected if the load indication is below a low load indication threshold.

5. The method according to claim 4, wherein the radio access scheme (4; 10) is selected randomly if the load indication is above the low load indication threshold.

6. The method according to claim 4 or 5, wherein the second radio access scheme (10) is selected if the load indicator is above a high load indication threshold.

7. The method according to claim 1 or 2, wherein
the one of the first information (28) and second information (38) comprises:
- a number of ACKs and/or NACKs observed on an downlink channel (DL) of the selected cell (C); and/or
- an indication from the baseband unit (BBU) of the selected cell (C) of access denial for the type of uplink payload (8) to be transmitted; and/or
- an indication from the baseband unit (BBU) of the selected cell (C) to use one of the first transmission scheme (4) and the second transmission scheme (10);
and/or
- an indication of a load of an uplink channel (UL) and/or of the baseband unit (BBU) of the selected cell (C); and/or
- an indication of a queue length of the baseband unit (BBU) of the selected cell (C); and/or
- a size of the uplink payload (8) to transmit; and/or
- a buffer size of the user equipment (UE) comprising uplink payload (8) to transmit;
- a first number of failed attempts to transmit the uplink payload (8) by means of the first radio access scheme (4); and/or
- a second number of failed attempts to transmit the uplink payload (8) by means of the second radio access scheme (10); and/or
- a priority of the user equipment (UE).

8. The method according to one of the preceding claims,
wherein the first radio access scheme (4) comprises:
- transmitting the uplink payload (8) without a prior uplink resource request (14); and
wherein the second radio access scheme (10) comprises:
- transmitting an uplink resource request (14);
- receiving an uplink resource assignment (18); and
- transmitting the uplink payload (8) according to the uplink resource assignment (18).

9. A user equipment (UE) configured to execute the method according to one of the preceding claims.

10. A method to operate a baseband unit (BBU) of a radio access network (2) for receiving uplink payload (8) from a user equipment (UE), the method comprising:
- receiving the uplink payload (8) and a corresponding preamble (6) from the user equipment (UE) in a cell (C) of the baseband unit (BBU) without a prior uplink resource assignment (18);
- decoding the preamble (6) and the corresponding uplink payload (8);
- determining a failure regarding the uplink payload (8); and
- transmitting an uplink resource assignment (18) in order to initiate or repeat the transmission of the uplink payload (8) by the user equipment (UE).

11. A baseband unit (BBU) configured to execute the method according to claim 10.

12. A method to operate a radio access network (2) comprising the method according to one of the claims 1 to 8 and the method according to claim 10 .

13. A radio access network (2) comprising the user equipment (UE) according to claim 9 and the baseband unit (BBU) according to claim 11.
